# EUROPÄISCHE PATENTSCHRIFT

(11) **EP 0 850 160 B1**
(45) Veröffentlichungstag und Bekanntmachung des Hinweises auf die Patenterteilung: **08.11.2000**
(21) Anmeldenummer: 96922765.1
(22) Anmeldetag: 04.07.1996
(51) Int. Cl.: B60R 21/16

(54) **VERFAHREN UND VORRICHTUNG ZUR FALTUNG EINES GASSACKES FÜR EIN AIRBAGMODUL**
METHOD AND DEVICE FOR FOLDING AN AIRBAG FOR STOWING IN AN AIRBAG MODULE
PROCEDE ET DISPOSITIF POUR PLIER UN COUSSIN D'AIR DESTINE A UN MODULE COUSSIN DE SECURITE GONFLABLE

(30) Priorität: 12.09.1995 DE 19535564
(43) Veröffentlichungstag der Anmeldung: 01.07.1998
(73) Patentinhaber: Petri AG, 63743 Aschaffenburg (DE)
(72) Erfinder: REH, Stefan, D-63939 Wörth (DE); MAROTZKE, Thomas, D-13187 Berlin (DE)
(74) Vertreter: Bärmann, Klaus, Dipl.-Ing.
(86) Internationale Anmeldenummer: DE9601250
(87) Internationale Veröffentlichungsnummer: WO9710124

(56) Entgegenhaltungen:
- DE-A- 4 422 276
- US-A- 5 140 799

## Beschreibung

Die Erfindung betrifft ein Verfahren zur Faltung eines Gassackes für ein Airbagmodul nach dem Oberbegriff des Anspruchs 1 sowie eine Vorrichtung zur Durchführung des Verfahrens.

Um einen Gassack in einem Airbagmodul verstauen zu können, ist es bekannt, diesen zu einem entsprechend kleinen Paket zu falten. Es sind verschiedene Faltungsarten bekannt geworden. So sind aus der US-PS 4 173 356 unterschiedliche gradlinige Faltungsarten bekannt, wobei die Falten strahlenförmig von einem Zentrum nach außen oder annähernd parallel zueinander verlaufen. Diese Faltungsarten weisen den Nachteil auf, daß sie zumindest bei Anwendung in einem Fahrer-Airbagmodul so zusammengelegt werden müssen, daß beim Entfalten eines derartigen Gassackes der in Teilbereichen des Gassackes erzeugte Innendruck das Öffnen einiger Falten verhindert. Weiterhin ist der Aufwand für die Faltung erheblich.

Aus der DE 44 22 276 A1 ist ein Gassack für ein Airbagmodul bekannt, bei dem der Gassack Hauptfalten aufweist, die zumindest zu einem Teil entlang geschlossener Bahnen um ein gedachtes Zentrum auf dem im wesentlichen leeren, ausgebreiteten Luftsack herum verlaufen. Die geschlossenen Hauptfalten beschreiben vorzugsweise Kreisbahnen oder Ellipsen geringer Exzentrizität.

Dieser Verlauf der Hauptfalten weist den Vorteil auf, daß sich der gefaltete Gassack sehr schnell und einfach öffnen kann. Insbesondere besteht beim Entfalten eines derartigen Gassackes nicht die Gefahr, daß der in Teilbereichen des Gassackes erzeugte Innendruck das Öffnen weiterer Falten verhindet. Dabei ist dieser Gassack für Fahrer-, Beifahrer- und Seitenairbags einsetzbar. Der Nachteil dieser Faltung besteht darin, daß der Aufwand für die maschinelle Faltung groß ist.

Der Erfindung liegt deshalb die Aufgabe zugrunde, den Aufwand für das Zusammenlegen eines Gassackes auf eine Größe, die ein Verstauen in einem Airbagmodul ermöglicht, zu verringern, wobei ein leichtes und vollständiges Entfalten des Gassackes im Crashfall gewährleitet sein muß.

Erfindungsgemäß wird das gemäß den kennzeichnenden Merkmalen des Anspruchs 1 erreicht.

Das Verfahren zur Faltung des Gassackes ist erfindungsgemäß dadurch gekennzeichnet, daß der ausgebreitete leere Gassack innerhalb eines festgelegten Höhenprofils auf ein Zentrum hin zusammengerafft wird. Im Gegensatz zu anderen bisher bekannten Faltungsarten wird bei diesem Verfahren eine chaotische Faltung vorgenommen, d.h. die Falten weisen keine vorbestimmte Form und Richtung auf. Es wurde jedoch gefunden, daß diese Faltung im wesentlichen hinterschnittarm ist, da das Oberteil des Gassackes immer oben bleibt. Dadurch ist das Öffnen aller Falten beim Entfaltungsvorgang des Gassackes gewährleistet.

Der Raffvorgang kann innerhalb der vorgegebenen Höhe gleichmäßig von allen Seiten erfolgen. Bei einem asymmetrischen Airbagmodul ist es jedoch zweckmäßig, daß der Gassack in einer Richtung und in der dazu senkrecht verlaufenden Richtung nacheinander auf die erforderliche Größe gerafft wird. Dabei erfolgt die Raffung an den Seiten zuerst, an denen wenig Platz für die Unterbringung des Gassackes im Airbagmodul vorhanden ist.

Der Vorteil dieses Verfahrens besteht darin, daß für die Raffung des Gassackes nur wenige Raffelemente erforderlich sind und daß gegenüber bekannten Faltverfahren wesentlich weniger Arbeitsschritte erforderlich sind. Es können alle Luftsack-Ausführungsformen gefaltet werden, z.B. mit Fangbändern und Reißnähten.

Der Aufwand für die Faltung des Gassackes wird nur unwesentlich erhöht, wenn nach einer weiteren Ausgestaltung der Erfindung dem ausgebreiteten leeren Gassack vor dem Raffen eine gewünschte Faltenlage und Biegerichtung des Gassackgewebes eingeprägt wird. Das kann dadurch erfolgen, daß der ausgebreitete leere Gassack vor dem Raffen durch mechanische Formelemente und/oder unter Hitze-, Dampf-, Druck- oder Vakuumeinwirkung vorgefaltet wird.

In einer bevorzugten Ausgestaltung des Verfahrens ist vorgesehen, den ausgebreiteten leeren Gassack vor dem Raffen zu plissieren.

Es ist zweckmäßig, daß die Aufblaseinrichtung oder eine Attrappe der Aufblaseinrichtung, die den Platz für die später einzubauende Aufblaseinrichtung freihält, vor dem Raffen des ausgebreiteten Gassackes in diesem positioniert und vormontiert wird.

Eine Vorrichtung zur Durchführung des vorher angegebenen Verfahrens ist dadurch gekennzeichnet, daß ein Unterteil für die Aufnahme des ausgebreiteten Gassackes und ein Oberteil mit Abständen zum Unterteil vorgesehen sind, wobei der Abstände dem erforderlichen Höhenprofil des gerafften Gassackes entsprechen, und daß Raffelemente zwischen dem Oberteil und dem Unterteil vorgesehen sind, die den Gassack umschließen und deren Lage diesem gegenüber veränderbar ist. Ober- und Unterteil sind zueinander verschiebbar. Der ausgebreitete leere Gassack für den Raffvorgang wird auf das Unterteil gelegt und das Oberteil wird in der erforderlichen Höhe über dem Unterteil positioniert. Anschließend werden die Raffelemente gegen den Gassack geschoben, bis dieser die für den Einbau in den Airbagmodul erforderliche Form und Größe aufweist.

Für die Raffung des Gassackes sind vorzugsweise vier Raffelemente vorgesehen, von denen sich je zwei paarweise gegenüberliegen, wobei die Paare quer zueinander liegen.

Mit dieser Anordnung wird erreicht, daß der Gassack an seinem gesamten Umfang von den Raffelementen umschlossen ist.

Das Oberteil ist vorzugsweise mehrteilig ausgeführt, indem ein als Niederhalter ausgeführtes gesondert bewegbares Segment vorgesehen ist, das die Größe und die Form des gerafften Gassackes aufweist. Mittels dieses Niederhalters ist es möglich, den gerafften Gassack in der Raffvorrichtung auch in den Airbagmodul bzw. in das Generatorblech einzubringen.

Weiterhin ist es zweckmäßig, auch das Unterteil mehrteilig auszuführen, indem ein als Generatorträgerblech-Halterung ausgeführtes, gesondert durch einen Ausschnitt in einer Unterplatte hindurch bewegbares Segment sowie auf der Unterplatte verschiebbare Schieber vorgesehen sind, die Schrauben des Gasgenerators sowie Haltestangen für die Generatorträgerblech-Halterung zumindest teilweise umschließen. Dieses geteilte Unterteil ermöglicht zusammen mit dem vorgenannten geteilten Oberteil das Einbringen des gerafften Gassackes in das Genratorträgerblech.

In einer weiteren Ausführungsform ist als Raffelement mindestens ein Spannband vorgesehen.

Zur Vorgabe einer Knick- oder Biegerichtung des Gassackes sind im Oberteil und/oder Unterteil an einen Druckluft- oder Vakuumerzeuger anschließbare Druchgangsbohrungen vorgesehen. Im Bereich der Durchgangsbohrungen kann der Gassack durch die eintretende Druckluft vor dem Raffen vom Ober- bzw. Unterteil weggedrückt werden oder infolge eines Vakuums vom Ober- oder Unterteil angesaugt werden.

In einer weiteren Ausführungsform sind zur Vorgabe einer Knick- oder Biegerichtung des Gassackes im Oberteil und/oder Unterteil bezüglich des Gassackes bewegliche Stifte vorgesehen.

In einer anderen Ausführungsform ist vorgesehen, die Raffvorrichtung durch eine Plissiervorrichtung zu ergänzen, mit deren Hilfe der Gassack vorgefaltet wird.

Als Plissiervorrichtung können zwei Bügelplatten mit zueinander passender dem vorgesehenen Faltenverlauf entsprechender Oberflächenstruktur vorgesehen sein. Weiterhin können auch Plissierräder vorgesehen sein.

Mittels Kälte und Feuchtigkeit kann diese Vorfaltung konserviert bzw. versteift werden.

Die Erfindung soll in Ausführungsbeispielen anhand von Zeichnungen erläutert werden. Es zeigen:
- Fig. 1: einen Querschnitt durch eine Raffvorrichtung in der Ausgangslage;
- Fig. 2: zwei Schieber in der Draufsicht, die Bestandteil des Unterteils der Raffvorrichtung sind;
- Fig. 3: die Stellung der Raffvorrichtung nach Fig. 1 nach dem Raffvorgang;
- Fig. 4: die Stellung der Raffvorrichtung nach Fig. 1 beim Einbringen des gerafften Gassackes in ein Generatorträgerblech;
- Fig. 5: einen Qerschnitt durch einen ohne Vorformen bzw. Vorgeben der Knick- oder Biegerichtung gerafften Gassack;
- Fig. 6a-c: eine Draufsicht auf die Raffelemente vor und nach dem Raffen sowie während des Raffens;
- Fig. 7: die Raffvorrichtung mit zusätzlichen Öffnungen im Ober- und Unterteil für die Einführung von Druckluft;
- Fig. 8: die Raffvorrichtung mit zusätzlichen Öffnungen für den Anschluß an einen Vakuumerzeuger;
- Fig. 9: die Raffvorrichtung mit zusätzlichen Stiften im Ober- und Unterteil;
- Fig. 10: schematisch den Aufbau einer Plissiervorrichtung;
- Fig 11: den Verlauf der vorgesehenen Falten im Gassack;
- Fig. 12: einen Teilschnitt durch einen gefalteten Gassack in einer Raffvorrichtung mit Spannband;
- Fig. 13: eine Draufsicht zu Fig. 12;
- Fig. 14: eine Draufsicht auf einen ungefalteten Gassack in einer Raffvorrichtung mit Spannband;
- Fig. 15: einen Schnitt durch Bügelplatten mit dazwischen liegendem Gassack vor dem Vorformen;
- Fig. 16: einen Schnitt durch den Gasssack nach dem Vorformen mittels der Bügelplatten nach Fig. 15.

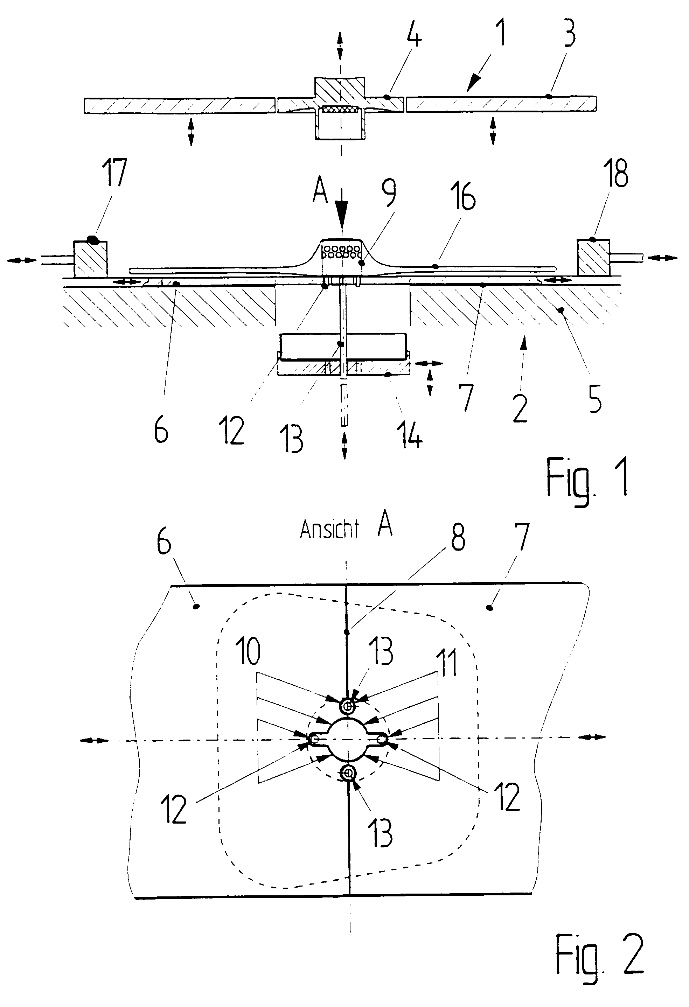

Die Raffvorrichtung besteht aus einem Oberteil 1 und einem Unterteil 2. Das Oberteil 1 weist eine Oberplatte 3 und in einer Öffnung dieser Platte einen Niederhalter 4 auf. Das Unterteil 2 besteht aus einer Unterplatte 5, auf der zwei Schieber 6, 7 zueinander verschiebbar angeordnet sind. Wie aus der Fig. 2 ersichtlich ist, stoßen die Schieber in der Stellung der Fig. 1 mit geraden, parallelen Kanten 8 aneinander und umschließen dabei mit abgerundeten Kantenabschnitten 10, 11 einen Gasgenerator 9 sowie Schrauben 12 des Gasgenerators 9 und Haltestangen 13 für den Gasgenerator. Unterhalb der Schieber 6, 7 ist in einer Halterung 14 ein Generatorträgerblech 15 angeordnet. Die Halterung 14 ist durch eine Ausnehmung in der Unterplatte 5 nach oben verschiebbar.

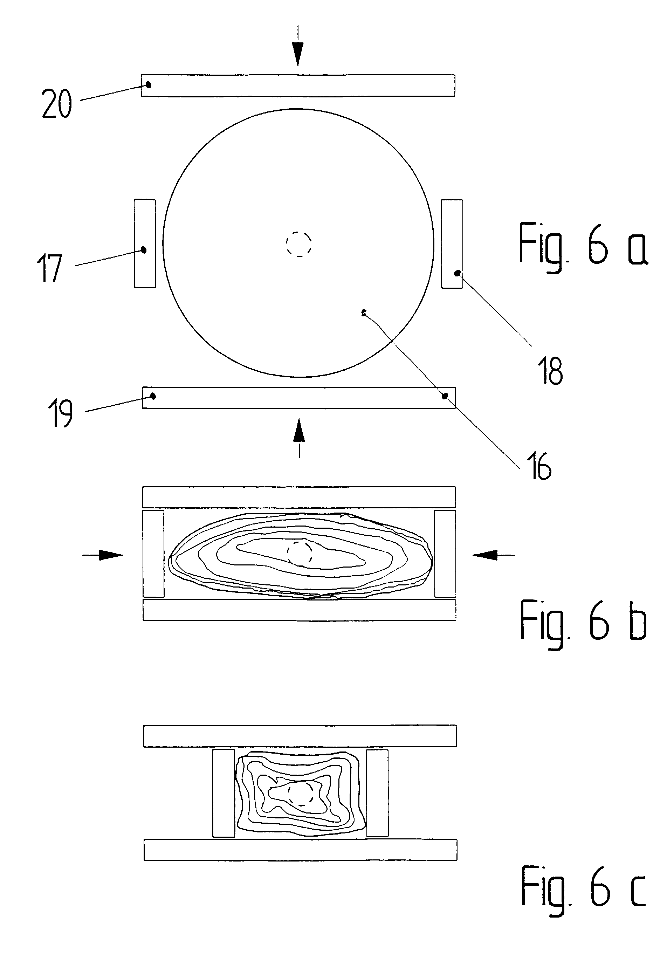

Auf den Schiebern 6, 7 befindet sich ein Gassack 16 im ausgebreiteten leeren Zustand zwischen Raffelementen 17 - 20 (Fig. 6), von denen in der Fig. 1 nur zwei dargestellt sind.

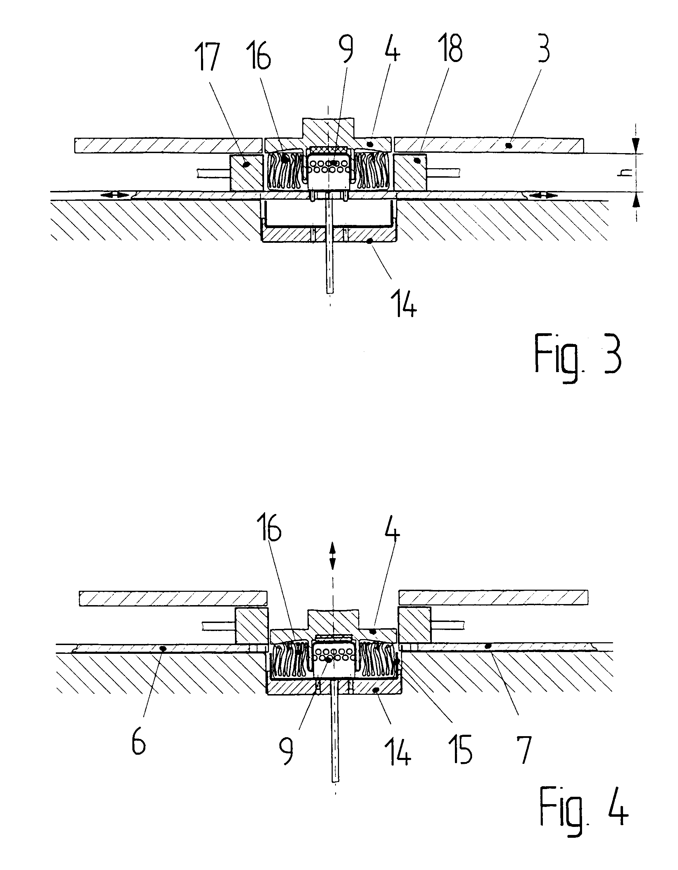

Zur Durchführung der Raffung des Gassackes 16 wird zunächst das Oberteil 1 abgesenkt, bis der Abstand h (Fig. 3) zwischen dem Oberteil 1 und dem Unterteil 2 der vorgesehenen Höhe des gefalteten Gassackes entspricht. In dieser Lage wird der Gassack 16 auf dem Gasgenerator 9 durch den Niederhalter 4 festgehalten. Die Raffelemente 17 bis 20 umschließen den ausgebreiteten Gassack 16 (Fig. 6a) und passen mit geringem Spiel zwischen das Ober- und Unterteil.

Für das Raffen werden die Raffelemente in Richtung des Zentrums des Gassackes verschoben. Dabei können die Raffelemente gleichzeitig oder nacheinander verschoben werden. In den Figuren 6b und 6c ist der Fall dargestellt, daß zunächst die Raffelemente 19, 20 in Richtung des Zentrums verschoben werden. Dann ergibt sich die aus Fig. 6b ersichtliche Raffung, bei der der Gassack in Richtung der Raffung verkleinert wird, während er sich in der quer dazu verlaufenden Richtung dehnt.

Nach Abschluß der Raffung mittels der Raffelemente 19, 20 erfolgt die Raffung quer dazu mittels der Raffelemente 17, 18. Der Gassack legt sich beim Raffvorgang willkürlich in Falten und wird nach oben und unten vom Ober- bzw. Unterteil begrenzt.

Der Raffvorgang ist abgeschlossen, wenn der Gassack auf eine solche Größe zusammengedrückt ist, daß er in das Airbagmodul einsetzbar ist. Zu diesem gehört das Generatorträgerblech 15, in das der geraffte Gassack einzusetzen ist. Zu diesem Zweck wird die Halterung 14 mit dem Generatorträgerblech 15 bis an die Unterseite der Schieber 6, 7 nach oben geschoben. Anschließend werden die Schieber 6, 7 aus dem Bereich des Gassackes 16 entfernt und mittels des Niederhalters 4 wird der geraffte Gassack 16 zusammen mit dem Gasgenerator 9 in das Generatorträgerblech geschoben (Fig. 4).

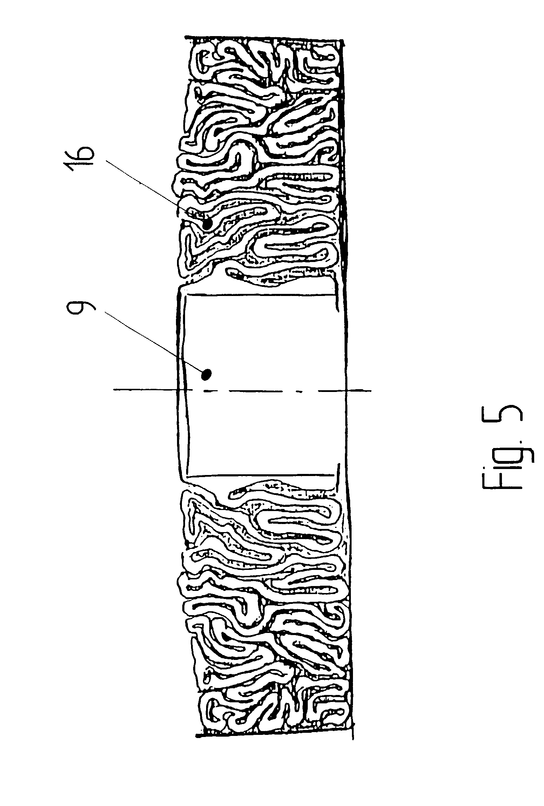

Aus dem in der Fig. 5 dargestellten Verlauf der Faltung ist erkennbar, daß die Falten keine Vorzugsrichtung aufweisen. Versuche haben jedoch ergeben, daß bei dieser willkürlichen Faltung das Oberteil des Gassackes immer oben liegt, so daß die Faltung im wesentlichen hinterschnittsarm erfolgt. Damit ist ein leichtes Entfalten des gesamten Gassackes gewährleistet.

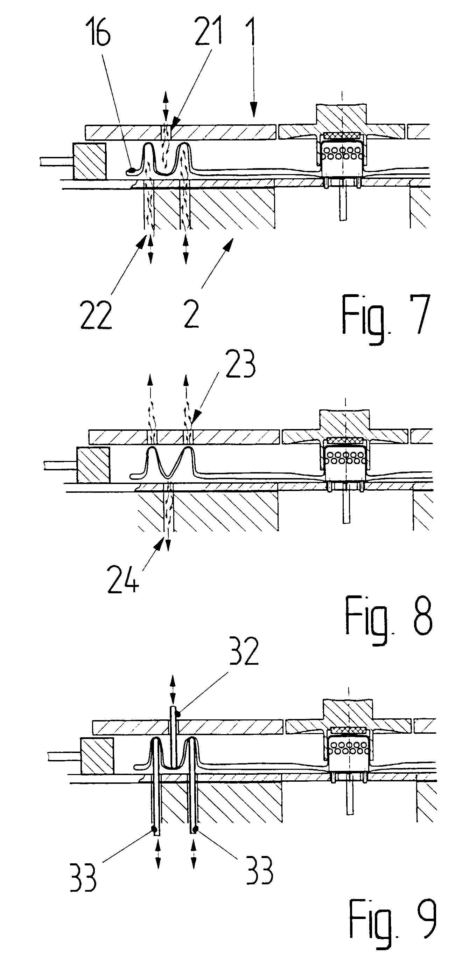

Ohne großen Mehraufwand ist es auch möglich, die Knick- bzw. Biegerichtung des Gassackes vorzugeben. Zu diesem Zweck sind im Ausführungsbeispiel der Fig. 7 im Oberteil 1 Durchgangsbohrungen 21 und im Unterteil 2 Durchgangsbohrungen 22 vorgesehen, durch die Druckluft in den Raum geblasen wird, der durch das Ober- und Unterteil 1, 2 und die Raffelemente 17 bis 20 gebildet wird. Durch die Druckluft der Durchgangsbohrungen 21 wird der ausgebreitete Gassack 16 auf das Unterteil 1 gedrückt, während durch die Druckluft der Durchgangsbohrungen 22 der Gassack angehoben wird, wodurch die Knick- bzw. Biegerichtung vorgegeben ist. Die Beaufschlagung mit Druckluft kann während des Raffens bestehen bleiben, da dabei keine mechanischen Teile in den Raum zwischen dem Ober- und Unterteil eingreifen.

Im Ausführungsbeispiel der Fig. 8 sind im Oberteil 1 Durchgangsbohrungen 23 und im Unterteil 2 Durchgangsbohrungen 24 vorgesehen, die an eine nicht dargestellte Vakuumpumpe angeschlossen sind. Infolge des Vakuums wird der Gassack im Bereich der Durchgangsbohrungen 24 an das Unterteil gesaugt, während er im Bereich der Durchgangsbohrungen 23 angehoben wird. Damit wird wie beim Ausführungsbeispiel der Fig. 7 die Knick- und Biegerichtung vorgegeben.

Im Ausführungsbeispiel der Fig. 9 weist das Oberteil 1 Stifte 32 auf, von denen nur einer dargestellt ist. Weiterhin weist das Unterteil 2 Stifte 33 auf. Diese Stifte sind im Oberteil bzw. Unterteil beweglich so angeordnet, daß die Stifte des einen Teils zwischen den Stiften des jeweils anderen Teils liegen. Werden die Stifte deshalb gegeneinander bewegt, wird der Gassack durch die Stifte vorgefaltet, wie es aus der Fig. 9 ersichtlich ist. Während des Raffvorganges werden die Stifte 32, 33 bei Annäherung der Raffelemente schrittweise aus dem Raum zwischen dem Oberteil 1 und dem Unterteil 2 zurückgezogen, so daß der Gassack mittels der Raffvorrichtung auf die für den Einbau in den Airbagmodul erforderliche Größe gebracht wird.

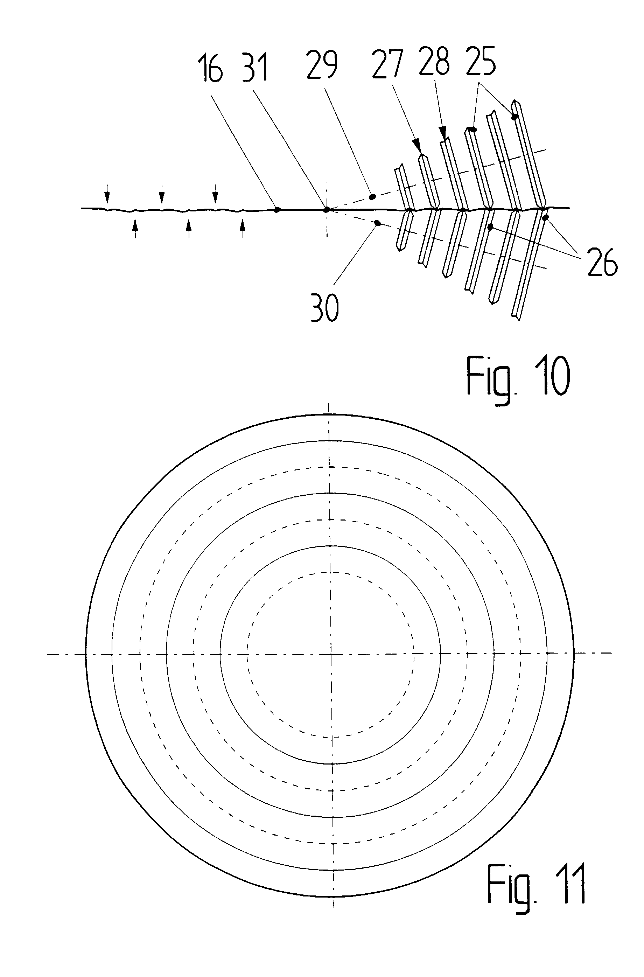

Im Ausführungsbeispiel der Fig. 10 ist schematisch eine Plissiervorrichtung dargestellt. Diese weist Plissierräder 25 mit einem Positivprofil 27 am Umfang und Gegenräder 26 mit einem Negativprofil 28 auf. Die Plissierräder mit positivem und negativem Profil kämmen miteinander, wobei sich zwischen diesen der zu plissierende Gassack 16 befindet.
Die Stellung der Achsen zueinander richtet sich nach der gewünschten Ausrichtung der Falten. Im Ausführungsbeispiel der Fig. 10 sollen die Falten entlang von Kreisbahnen verlaufen, wie es in Fig. 11 dargestellt ist. Deshalb sind beidseitig des zu plissierenden Gassackes Plissierräder unterschiedlicher Größe auf Wellen angeordnet, deren Längsachsen 29, 30 durch einen Punkt 31 verlaufen.

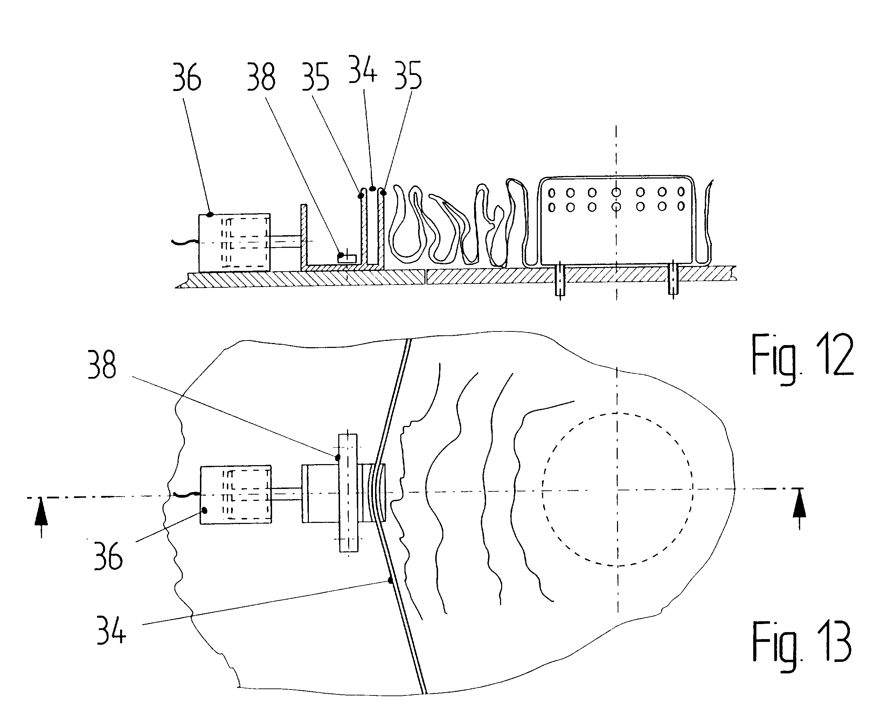

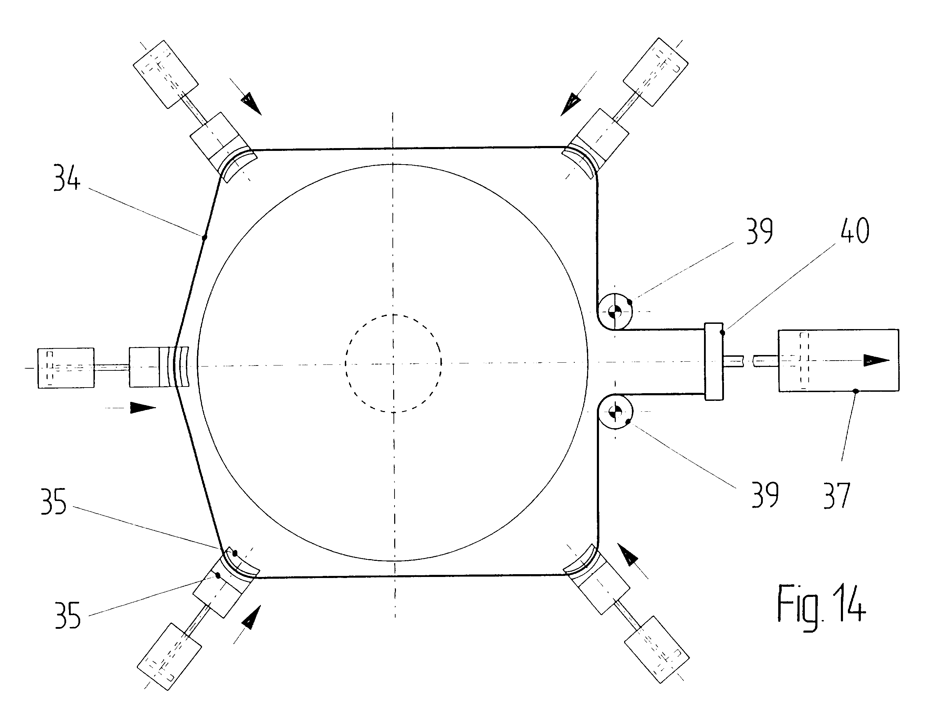

Im Ausführungsbeispiel der Figuren 12, 13 und 14 ist der Raffvorgang mittels eines Spannbandes 34 dargestellt. Diesem sind Spannbandbacken 35 zugeordnet, die das Spannband mittels Zylindern 36 in einer Ausgangslage halten. Aus dieser wird das Spannband 34 mit Hilfe eines Druckzylinders 37 gezogen, wobei die Spannbandbacken 35 dabei ihre Lage mit verändern bis sie an einer justierbaren Anschlag-Grundplatte 38 anliegen, wie es in Fig. 12 und 13 dargestellt ist. Die Spannbandbacken 35 bestimmen die äußere Form des gerafften Gassackes mit, da das Spannband an den Spannbacken 35 jeweils abgebogen wird. Die Bewegungsrichtung der Spannbandbacken ist in der Fig. 14 durch Pfeile dargestellt.

Wie aus der Fig. 14 ersichtlich ist laufen die Bandenden dabei über Umlenkrollen 39 und sind an einer Traverse 40 befestigt, die auf der Kolbenstange des Druckzylinders 37 sitzt. In den Figuren 12 und 13 ist der Gassack in einem gefalteten Zustand dargestellt, während er in der Fig. 14 vor Beginn der Faltung zwischen den Spannbändern ausgebreitet dargestellt ist.

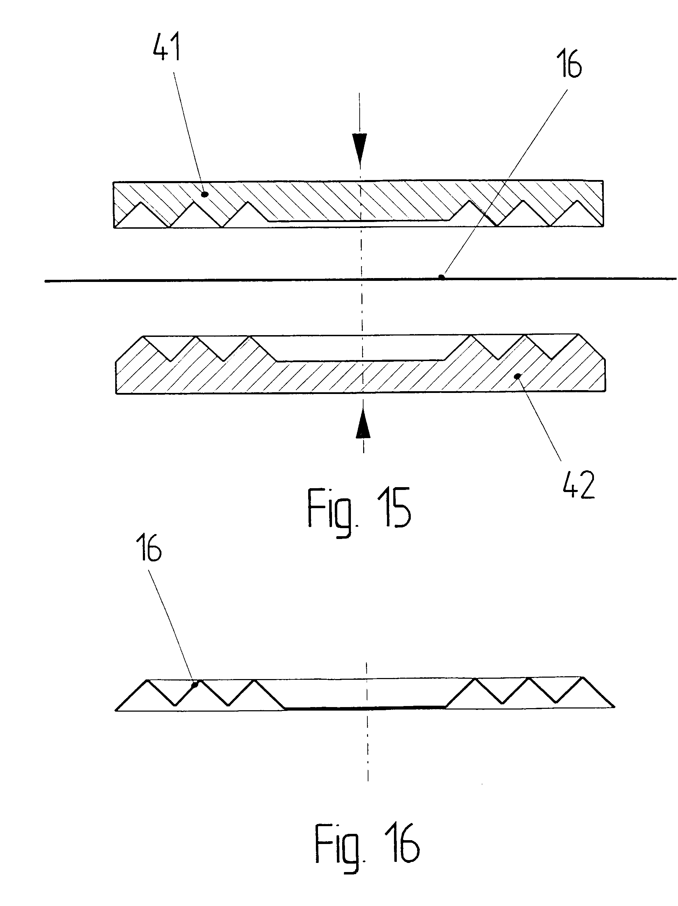

Die in Fig. 11 und in Fig. 16 dargestellte Struktur kann auch mittels zweier Bügelplatten 41, 42 mit zueinander passender Oberflächenstruktur erzielt werden. Mit deren Hilfe wird die Faltenlage und Richtung der Falten mit Dampf und Wärme in den Gassack eingebügelt.

## Patentansprüche

1. Verfahren zur Faltung eines Gassackes für ein Airbagmodul,
**dadurch gekennzeichnet**,
daß der ausgebreitete leere Gassack innerhalb eines festgelegten Höhenprofils auf ein Zentrum hin zusammengerafft wird.

2. Verfahren nach Anspruch 1, **dadurch gekennzeichnet**, daß der Gassack in einer Richtung und in der dazu senkrecht verlaufenden Richtung nacheinander auf die erforderliche Größe gerafft wird.

3. Verfahren nach Anspruch 1 oder 2, **dadurch gekennzeichnet**, daß dem ausgebreiteten leeren Gassack vor dem Raffen eine gewünschte Faltenlage und Biegerichtung des Gassackgewebes eingeprägt wird.

4. Verfahren nach mindestens einem der vorhergehenden Ansprüche, **dadurch gekennzeichnet**, daß der ausgebreitete leere Gassack vor dem Raffen durch mechanische Formelemente und/oder unter Hitze-, Dampf-, Druck- oder Vakuumeinwirkung vorgefaltet wird.

5. Verfahren nach mindestens einem der vorhergehenden Ansprüche, **dadurch gekennzeichnet**, daß der ausgebreitete leere Gassack vor dem Raffen plissiert wird.

6. Verfahren nach mindestens einem der vorhergehenden Ansprüche, **dadurch gekennzeichnet**, daß die Gasaufblasvorrichtung vor dem Raffen des ausgebreiteten Gassackes in diesem positioniert wird.

7. Vorrichtung zur Durchführung des Verfahrens nach mindestens einem der Ansprüche 1 bis 6, **dadurch gekennzeichnet**, daß eine Unterteil (2) für die Aufnahme des ausgebreiteten Gassackes (16) und ein Oberteil (1) mit Abständen (h) zum Unterteil (2) vorgesehen sind, wobei die Abstände (h) dem erforderlichen Höhenprofil des gerafften Gassackes (16) entsprechen, und daß Raffelemente (17 - 20) zwischen dem Oberteil (1) und dem Unterteil (2) vorgesehen sind, die den Gassack (16) umschließen und deren Lage diesem gegenüber veränderbar ist.

8. Vorrichtung nach Anspruch 7, **dadurch gekennzeichnet**, daß vier Raffelemente (17 - 20) vorgesehen sind, von denen sich je zwei (17, 18 und 19, 20) paarweise gegenüberliegen, wobei die Paare quer zueinander liegen.

9. Vorrichtung nach Anspruch 7 oder 8, **dadurch gekennzeichnet**, daß das Oberteil (1) mehrteilig ausgeführt ist, indem ein als Niederhalter (4) ausgeführtes gesondert bewegbares Segment vorgesehen ist, das die Größe des gerafften Gassackes (16) aufweist.

10. Vorrichtung nach mindestens einem der vorhergehenden Ansprüche 7 bis 9, **dadurch gekennzeichnet**, daß das Unterteil (2) mehrteilig ausgeführt ist, indem ein als Generatorträgerblech-Halterung (14) ausgeführtes gesondert durch einen Ausschnitt in einer Unterplatte (5) hindurch bewegbares Segment sowie auf der Unterplatte (5) verschiebbare Schieber (6, 7) vorgesehen sind, die Schrauben (12) des Gasgenerators (9) sowie Haltestangen (13) für die Generatorträgerblech-Halterung zumindest teilweise umschließen.

11. Vorrichtung nach mindestens einem der vorhergehenden Ansprüche 7 bis 10, **dadurch gekennzeichnet**, daß im Oberteil (1) und/oder Unterteil (2) an einen Druckluft- oder Vakuumerzeuger anschließbare Durchgangsbohrungen (21 -24) vorgesehen sind.

12. Vorrichtung nach Anspruch 7, **dadurch gekennzeichnet**, daß als Raffelement ein Spannband vorgesehen ist.

13. Vorrichtung nach mindestens einem der vorhergehenden Ansprüche 7 bis 12, **dadurch gekennzeichnet**, daß im Oberteil (1) und/oder Unterteil (2) bezüglich des Gassackes bewegliche Stifte für das Vorformen der Knick- bzw. Faltrichtung des Gassackes vorgesehen sind.

14. Vorrichtung nach mindestens einem der vorhergehenden Ansprüche 7 bis 13, **dadurch gekennzeichnet**, daß eine Plissiervorrichtung vorgesehen ist.

15. Vorrichtung nach Anspruch 14, **dadurch gekennzeichnet**, daß als Plissiervorrichtung zwei Bügelplatten (41, 42) mit zueinander passender, dem vorgesehenen Faltenverlauf entsprechender Oberflächenstruktur vorgesehen sind.

16. Vorrichtung nach Anspruch 14, **dadurch gekennzeichnet**, daß Plissierräder (25, 26) vorgesehen sind.

## Claims

1. Method for folding an airbag for an airbag module characterised in that the spread out empty airbag is gathered up towards a centre inside a fixed vertical profiled section.

2. Method according to claim 1 characterised in that the airbag is gathered first in one direction and then in the direction at right angles thereto down to the required size.

3. Method according to claim 1 or 2 characterised in that before gathering a desired fold position and bending direction of the airbag fabric is imprinted on the spread out empty airbag.

4. Method according to at least one of the preceding claims characterised in that the spread out empty airbag is pre-folded prior to gathering through mechanical shaping elements and/or through heat, steam, pressure or vacuum action.

5. Method according to at least one of the preceding claims, characterised in that the spread out empty airbag is pleated prior to gathering.

6. Method according to at least one of the preceding claims characterised in that the air inflating device is positioned in the spread out airbag before it is gathered.

7. Device for carrying out the method according to at least one of claims 1 to 6 characterised in that a lower part (2) is provided for holding the spread out airbag (16) and an upper part (1) is provided at distances (h) from the lower part (2) whereby the distances (h) correspond to the required vertical profiled section of the gathered airbag (16) and that gathering elements (17-20) are provided between the upper part (1) and lower part (2) which enclose the airbag (16) and whose position can be changed relative to same.

8. Device according to claim 7 characterised in that four gathering elements (1'7-20) are provided of which each two (17, 18 and 19,20) are opposite each other in pairs wherein the pairs lie crosswise relative to each other.

9. Device according to claim 7 or 8 characterised in that the upper part (l) is multi-part where a separately movable segment is provided designed as a holding down holder (4) which has the size of the gathered airbag (16).

10. Device according to at least one of the preceding claims 7 to 9 characterised in that the lower part (2) is multi part where a segment designed as a generator support plate holder (14) can be moved separately through a cut out section in a lower plate (5) and sliders (6,7) are provided displaceable on the lower plate (5) to enclose at least in part the screws (12) of the gas generator (9) as well as holding rods (13) for the generator support plate holder.

11. Device according to at least one of the preceding claims 7 to 10 characterised in that the upper part (1) and/or the lower part (2) are provided with through bores (21-24) which can be attached to a compressed air or vacuum generator.

12. Device according to claim 7 characterised in that a tension band is provided as a gathering element.

13. Device according to at least one of the preceding claims 7 to 12 characterised in that pins are provided in the upper part (1) and/or lower part (2) which can be moved relative to the airbag to pre-shape the creasing and folding direction of the airbag.

14. Device according to at least one of the preceding claims 7 to 13 characterised in that a pleating device is provided.

15. Device according to claim 14 characterised in that two ironing plates (41,42) are provided as the pleating device and have matching surface structures corresponding to the proposed folding path.

16. Device according to claim 14 characterised in that pleating wheels (25, 26) are provided.

## Revendications

1. Procédé pour replier un coussin de gaz pour un module d'air-bag,
caractérisé en ce
qu'on resserre le sac à gaz vide étalé, en direction d'un centre, à l'intérieur d'un profil en hauteur fixé.

2. Procédé selon la revendication 1, caractérisé en ce qu'on resserre le sac à gaz successivement dans une direction et dans la direction perpendiculaire à la précédente.

3. Procédé selon la revendication 1 ou 2, caractérisé en ce qu'avant le resserrement on forme par une empreinte dans le sac à gaz vide étalé, une position désirée de pliage et une direction de coudage du tissu du sac à gaz.

4. Procédé selon au moins l'une des revendications précédentes, caractérisé en ce qu'avant le resserrement on réalise un pliage préalable du sac à gaz vide étalé, au moyen d'éléments mécaniques de mise en forme et/ou moyennant l'action d'une chaleur, d'une vapeur, d'une pression ou d'un vide.

5. Procédé selon au moins l'une des revendications précédentes, caractérisé en ce qu'avant le resserrement, on plisse le sac à gaz vide étalé.

6. Procédé selon au moins l'une des revendications précédentes, caractérisé en ce qu'avant le resserrement du sac à gaz étalé, on met en place le dispositif de soufflage de gaz dans le sac.

7. Dispositif pour la mise en oeuvre du dispositif selon l'une des revendications 1 à 6, caractérisé en ce qu'il est prévu une partie inférieure (2) servant à loger le sac à gaz étalé (16) et une partie supérieure (1) à des distances (h) de la partie inférieure (2), les distances (h) correspondant au profil en hauteur requis du sac à gaz resserré (16), et qu'entre la partie supérieure (1) et la partie inférieure (2) sont prévus des éléments de resserrement (17-20), qui entourent le sac à gaz (16) et dont la position par rapport à ce sac peut être modifiée.

8. Dispositif selon la revendication 7, caractérisé en ce que quatre éléments de resserrement (17-20) sont prévus, deux d'entre eux (17, 18 et 19, 20) étant situés en vis-à-vis par couples, les couples étant disposés transversalement l'un par rapport à l'autre.

9. Dispositif selon la revendication 7 ou 8, caractérisé en ce que la partie supérieure (1) est réalisée en plusieurs éléments, par le fait qu'il est prévu un segment qui est agencé sous la forme d'un serre-flan (4) et est déplaçable séparément et qui possède la taille du sac à gaz (16) resserré.

10. Dispositif selon au moins l'une des revendications précédentes 7 à 9, caractérisé en ce que la partie inférieure (2) est formée de plusieurs éléments, par le fait qu'il est prévu un segment agencé sous la forme d'un dispositif (14) de retenue d'une tôle de support d'un générateur et déplaçable séparément à travers une découpe formée dans une plaque inférieure (5), ainsi que des poussoirs (6, 7) déplaçables sur la plaque inférieure (5) et qui entourent au moins partiellement des vis (12) du générateur de gaz (9) ainsi que des bords de retenue (13) pour le dispositif de retenue de la tôle de support du générateur.

11. Dispositif selon au moins l'une des revendications précédentes 7 à 10, caractérisé en ce que des perçages traversants (21-24) devant être raccordés à un générateur d'air comprimé ou de vide sont prévus dans la partie supérieure (1) et/ou dans la partie inférieure (2).

12. Dispositif selon la revendication 7, caractérisé en ce qu'une bande de serrage est prévue en tant qu'élément de resserrement.

13. Dispositif selon au moins l'une des revendications précédentes 7 à 12, caractérisé en ce que des tiges mobiles par rapport au sac à gaz sont prévues, pour le préformage de la direction de coudage ou de pliage du sac à gaz, dans la partie supérieure (1) et/ou dans la partie inférieure (2).

14. Dispositif selon au moins l'une des revendications précédentes 7 à 13, caractérisé en ce qu'il est prévu un dispositif de plissage.

15. Dispositif selon la revendication 14, caractérisé en ce qu'il est prévu, comme dispositif de plissage, deux plaques de repassage (41, 42) possédant des structures de surface adaptées l'une à l'autre qui correspondent à la configuration prévue des plis.

16. Dispositif selon la revendication 14, caractérisé en ce que des roues de plissage (25, 26) sont prévues.
